(19) **Europäisches Patentamt / European Patent Office / Office européen des brevets**

(11) **EP 2 128 797 B1**

(12) **EUROPÄISCHE PATENTSCHRIFT**

(45) Veröffentlichungstag und Bekanntmachung des Hinweises auf die Patenterteilung:
**24.11.2010 Patentblatt 2010/47**

(51) Int Cl.:
***G06K 9/62*** *(2006.01)*

(21) Anmeldenummer: **08156986.5**

(22) Anmeldetag: **27.05.2008**

(54) **Verfahren und Vorrichtung zur Musterverarbeitung**

Method and device for working on prototypes

Procédé et dispositif de traitement d'échantillon

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**02.12.2009 Patentblatt 2009/49**

(73) Patentinhaber: **Falk, Eberhard**
**58099 Hagen (DE)**

(72) Erfinder: **Falk, Eberhard**
**58099 Hagen (DE)**

(74) Vertreter: **Betten & Resch**
**Patentanwälte**
**Theatinerstrasse 8**
**80333 München (DE)**

(56) Entgegenhaltungen:
**US-A- 5 422 961     US-A- 6 081 620**
**US-B1- 6 295 367**

• **KENICHIRO ISHII: "DESIGN OF A RECOGNITION DICTIONARY USING ARTIFICIALLY DISTORED CHARACTERS" SYSTEMS & COMPUTERS IN JAPAN, WILEY, HOBOKEN, NJ, US, Bd. 21, Nr. 9, 1. Januar 1990 (1990-01-01), Seiten 35-44, XP000220499 ISSN: 0882-1666**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

### Gebiet der Erfindung

Die Erfindung betrifft ein Verfahren und eine Vorrichtung zur Musterverarbeitung.

### Stand der Technik

Heute sind bereits zahlreiche Verfahren zur Musterverarbeitung und Mustererkennung bekannt. Ein Nachteil der bekannten Verfahren liegt jedoch darin, dass sie jeweils nur für spezielle Arten von Mustern verwendbar sind. Die allgemeine Verwendbarkeit dieser bekannten Verfahren ist somit stark eingeschränkt.

Außerdem führen alle bekannten Verfahren in irgendeinem Schritt stochastische Methoden (z. Bsp. Hidden Markov Models - HMM's) oder eine metrische Struktur ein (Neuromanifolds oder Kohonen-Maps).

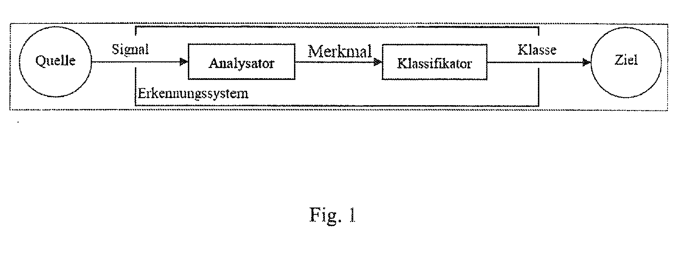

Durch Verwendung sehr komplexer Rechenalgorithmen sind bisherige Verfahren sehr aufwendig und benötigen dadurch enorme Rechenleistung. Außerdem versuchen sie oft, die Vielfalt durch Normierung und Standardisierung am Eingang zu verhindern, um dem nachfolgenden Klassifikator die Arbeit zu erleichtern. Ein derartiges bekanntes Verfahren zur Mustererkennung ist in Fig. 1 schematisch dargestellt. Im zu erkennenden Eingangssignal werden von einem Analysator charakteristische Merkmale erfasst und diese anschließend mittels eines Klassifikators einer bestimmten Symbolklasse zugeordnet.

Die US 5,422,961 beschreibt eine Vorrichtung und ein Verfahren zur Mustererkennung, wobei von einem Eingangsmuster eine Anzahl von Variationen (Translation, Rotation etc.) erzeugt werden und durch Berechnung der Lie-Ableitungen der Tangentialraum der Menge aller Variationen berechnet wird. Dieser Tangentialraum dient dann als Metrik zur Bestimmung desjenigen Ergebnismusters, das den geringsten Abstand zu dem zu klassifizierenden Eingabemuster hat.

Die US 6,081,620 beschreibt ein Verfahren zur Mustererkennung, welches Kontextinformation verwendet, um aus mehreren Mustervarianten akzeptable Klassifizierer vom Bayes-Typ auszuwählen.

Die Veröffentlichung von Ishii mit dem Titel "Design of a recognition dictionary using artificially distorted characters" in Systems and Computers in Japan, Vol. 21, No. 9, Seiten 35 bis 44, 1990, beschreibt die Verwendung von verzerrten Zeichen im Merkmalsraum zur Verbesserung der optischen Zeichenerkennung, wobei zur Klassifikation die Nächste-Nachbar-Methode verwendet wird.

### Zusammenfassung der Erfindung

Der vorliegenden Erfindung liegt somit die Aufgabe zugrunde, bekannte Verfahren und Vorrichtungen zur Mustererkennung zu verbessern, insbesondere im Hinblick auf die Treffgenauigkeit der Mustererkennung, Flexibilität und Schnelligkeit der Lemphase.

Im Gegensatz zu den bekannten Mustererkennungsverfahren lebt das erfindungsgemäße Verfahren von der Vielfalt und verringert die Normierung und Standardisierung der Eingangsmuster.

Zur Lösung dieser Aufgabe wird erfindungsgemäß ein Verfahren zur Musterverarbeitung gemäß Anspruch 1 vorgeschlagen.

Das erfindungsgemäße Verfahren zur Musterverarbeitung kann Muster in Echtzeit und mit sehr hoher Genauigkeit und sehr geringem Rechenaufwand erkennen. In der Performance übertrifft diese Methode dabei deutlich die Hidden Markov Models (HMM's), die bisher Stand der Technik zur Musterverarbeitung waren.

Das Verfahren kann ausserdem Probleme des VLR-OCR (Very Low Resolution - OCR, auch HMM's) in Zusammenhang mit Erkennung von wirklich sehr kleinen Schriften sehr gut lösen.

Das Eingangsmuster kann dabei ein räumlich variables Eingangsbild sein. Vorzugsweise werden die diskreten Varianten des diskretisierten Eingangsmusters in Verfahrensschritt b) dann jeweils durch Bildverarbeitungsoperationen wie beispielsweise Verschiebungen, Drehungen, Skalierungen und/oder Schwellwertoperationen des Eingangsmusteres erzeugt.

Das Eingangsmuster kann aber beispielsweise auch ein zeitlich veränderliches Eingangssignal sein.

Die Zuordnung des Ausgangssymbols wird dabei vorzugsweise jeweils durch einen Lernvorgang erlernt, der eine Rückkopplung des ausgewählten Symbols als ein Referenzsymbol an einem Symboleingang (set) umfasst.

Dabei werden aus einer Vielfalt von (ggf. zeitabhängigen) symbolischen Eingangssignalen immer vollständigere Karten der Außenwelt zusammensetzt. In ihrer Gesamtheit bewirken diese Karten eine rasche, zuverlässige und robuste Musterverarbeitung, d.h. eine Abbildung auf ein Auswahlsymbol.

Die Menge der zugeordneten Symbole in Verfahrensschritt c) aus Anspruch 1 kann ein Symbol mit der Bedeutung "unbestimmt" umfassen, welches angibt, dass dem Eigangsmuster kein bestimmtes Ausgangssymbol zugeordnet ist.

Die festgelegte Auswahlregel in Verfahrensschritt d) aus Anspruch 1 umfasst vorzugsweise eine Mehrheitsentscheidung, wobei beispielsweise eine einfache Mehrheit der Symbole zur Bestimmung des ausgewählten Symbols ausreichen kann.

Bei der Mehrheitsentscheidung kann auch eine Anzahl von Zuordnungen anderer Symbole (Gegenstimmen) erfasst werden.

Um das Verfahren sehr flexibel und anpassungsfähig zu gestalten, kann die Anzahl n von erzeugten diskreten Varianten des quantisierten Eingangsbildes und die Codierung der Eingangssymbole während des Verfahrensablaufs dynamisch geändert werden.

Die Musterverarbeitung kann als besonders leistungsfähiges mehrstufiges Verfahren ausgeführt werden, wobei ausgewählte Symbole einer ersten Verfahrensstufe als Eingangsmuster einer zweiten Verfahrensstufe dienen. Die Erzeugung einer Anzahl n diskreten Varianten des diskretisierten Eingangsmusteres in Verfahrensschritt b) der zweiten Verfahrensstufe kann dabei durch Mischen von Ausgangssymbolen der ersten Stufe erfolgen.

Ferner wird erfindungsgemäß eine Vorrichtung zur Musterverarbeitung <u>gemäß Anspruch 15</u> vorgeschlagen.

Die Eingangsstufen sind dabei vorzugsweise als Assoziativspeicher, beispielsweise als Hash-Tabellen oder auch als gewöhnliche Direktzugriffsspeicher (RAM) ausgebildet.

Die Eingangsstufen können dabei jeweils einen Mustereingang, einen Referenzsymboleingang, einen Aktualisierungsaktivierungseingang und einen Symbolausgang aufweisen.

Die Auswahleinheit weist dabei vorzugsweise eine Anzahl n von Symboleingängen, einen Symbolausgang, einen Ausgang zur Ausgabe eines Signals (majority), welches die Anzahl angibt, wie oft das ausgwählte Symbol in die Auswahleinrichtung eingegeben wurde, und einen Ausgang zur Ausgabe eines Signals (veto), welches eine Anzahl von Zuordnungen anderer Symbole (Gegenstimmen) angibt, auf.

Die Auswahleinheit kann zusätzlich einen Referenzsymboleingang und einen Aktualisierungsaktivierungseingang aufweisen.

Es werden $n \geq 3$, (typisch wenigstens einhundert oder mehr) Speichereinheiten mit einer Abstimmungsprozedur kombiniert, wobei das Ergebnis der Mehrheitsentscheidung unter bestimmten Bedingungen auf die Referenzsymbol-Eingänge der Speichereinheiten zurückgeführt wird, was zur Vervollständigung des Lernvorgangs und somit der Karten führt.

Kurze Beschreibung der Zeichnung

Die Erfindung wird im Folgenden anhand von Ausführungsbeispielen unter Bezugnahme auf die Figuren beschrieben, in denen:

Fig. 1     schematisch ein bekanntes Musterverarbeitungsverfahren illustriert;

Fig. 2     schematisch ein Ausführungsbeispiel der erfindungsgemäßen Musterverar- beitungsvorrichtung zeigt;

Fig. 3     schematisch eine Speichereinheit der in Fig. 2 dargestellten Musterverarbei- tungsvorrichtung zeigt;

Fig. 4     schematisch die Auswahleinheit der in Fig. 2 dargestellten Musterverarbei- tungsvorrichtung zeigt;

Fig. 5     ein erstes Beispiel der erfindungsgemäßen Erzeugung einer diskreten Vari- ante eines Eingangsbildes zeigt;

Fig. 6     ein zweites Beispiel der erfindungsgemäßen Erzeugung einer diskreten Vari- ante eines Eingangsbildes zeigt;

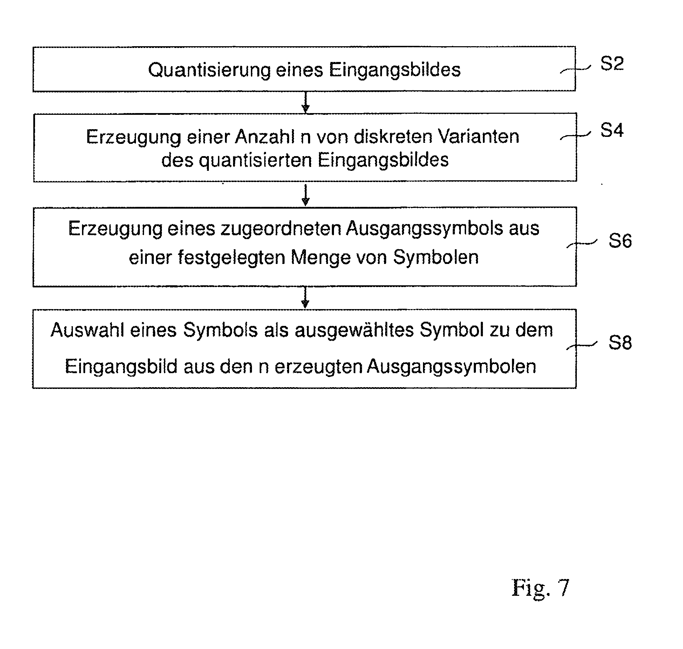

Fig. 7     anhand eines Fussdiagramms die Verfahrensschritte eines Ausführungsbei- spiels des erfindungsgemäßen Musterverarbeitungsverfahrens zeigt;

Fig. 8     schematisch die Abbildung eines Eingangsbildraumes auf eine Anzahl von Ausgangssymbolen illustriert;

Fig. 9     schematisch ein Ausführungsbeispiel einer erfindungsgemäßen zweistufigen Musterverarbeitungsvorrichtung zeigt,

Fig. 10     schematisch ein weiteres Ausführungsbeispiel einer erfindungsgemäßen zweistufigen Musterverarbeitungsvorrichtung zeigt.

Detaillierte Beschreibung der Erfindung

Ausführungsbeispiele der Erfindung werden im Folgenden anhand der beiliegenden Figuren erläutert.

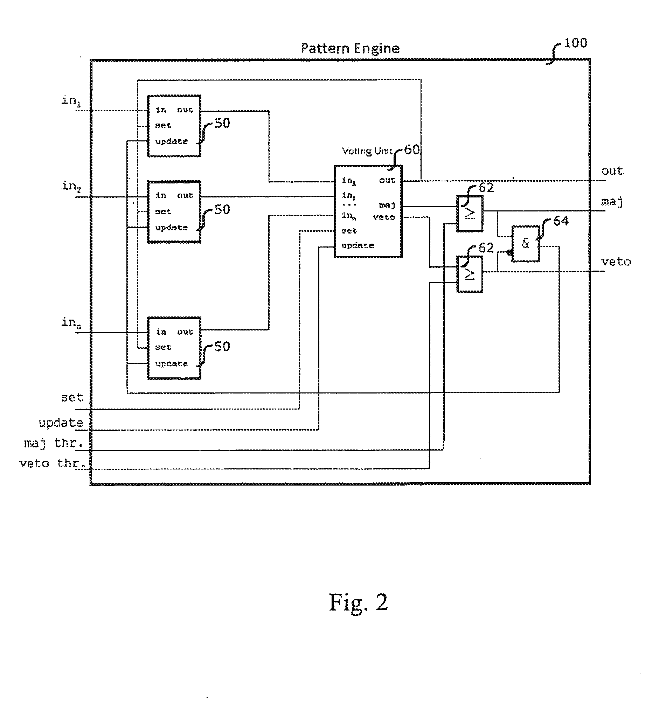

Fig. 2 zeigt schematisch ein Ausführungsbeispiel der erfindungsgemäßen Musterverarbeitungsvorrichtung 100. Diese weist eine Vielzahl (typisch einige hundert) mit jeweils einem Signaleingang verbundene Eingangsstufen 50 auf, deren Signalausgänge alle mit einer Auswahleinheit 60 verbunden sind. Der Ausgang der Auswahleinheit 60 ist wiederum mit zwei Komparatoren 62 zum Vergleich mit eingegebenen Schwellwerten sowie einem Logikgatter 64 verbunden. Die Funktionalität der einzelnen Komponenten der in Fig. 2 gezeigte Schaltungsanordnung wird nachfolgend beschrieben.

(1) Die Eingangsstufen

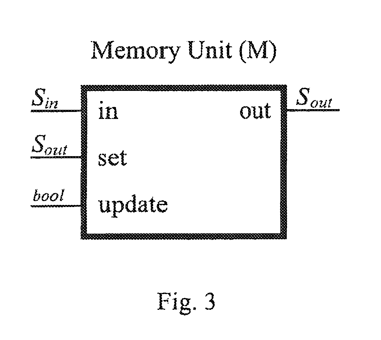

Ein Ausführungsbeispiel der Eingangsstufe 50 ist schematisch in Fig. 3 gezeigt. Jede Eingangsstufe (Speichereinheit) 50 realisiert eine Abbildung von einer Symbol-Domäne $S_{in}$ in eine andere Symbol-Domäne $S_{out}$, die durch eine Update-Operation verändert werden kann.

Sie können als Assoziativspeicher (Hashtabellen, CAM) oder als ganz gewöhnliches RAM mit $n$ Adresseingängen und $m$ Datenausgängen realisiert sein.

Eine Symbol-Domäne ist eine endliche Menge diskreter Symbole, erweitert um das spezielle Symbol $\perp$, mit der Bedeutung "unbestimmt".

Beispiele: Assoziativspeicher ( CAM , Hashtabelle )

$S_{in}$ = { rot, orange, gelb, grün, indigo, violett, $\perp$ }
$S_{out}$ = { gut, schlecht, $\perp$ }

oder (realisierbar durch gewöhnliches RAM)

Sin = { 0000 = $\perp$, 0001, 0010, 0011, 0100, ... , 1111 }
Sout = { 00 = $\perp$, 01, 10, 11 }

Das Verhalten des Ausführungsbeispiels der Eingangsstufe 50 läßt sich wie folgt zusammenfassen (typische Speichergrößen liegen bei bis zu 100 Megabit):

- Anfangs bildet M jedes Eingangssymbol auf das Symbol $\perp$ ab.
- Dieser Zustand wird auch als "leerer Speicher" bezeichnet.
- Wenn UPDATE auf false liegt, ändert sich daran nichts.
- Wenn UPDATE auf true liegt, erscheint der augenblickliche Wert von SET am Ausgang OUT.
- Wenn UPDATE wieder auf false geht, bleibt die Assoziation zwischen dem Wert IN und dem Wert OUT gespeichert.
- Der Wert $\perp$ spielt für OUT und SET keine Sonderrolle, allerdings wird ein $\perp$ am Eingang IN immer auf $\perp$ am Ausgang OUT abgebildet.

Dabei müssen die Symbolmengen nicht von vornherein festgelegt sein. Ein neues, noch nie aufgetretenes Symbol an IN wird auf $\perp$, abgebildet. Über den SET-Eingang können neue Ausgangssymbole hinzugefügt werden.

Das Symbol $\perp$ erlaubt es den Speichereinheiten, Funktionen mit wechselnden Definitionsbereichen zu speichern.

(2) Die Auswahleinheit

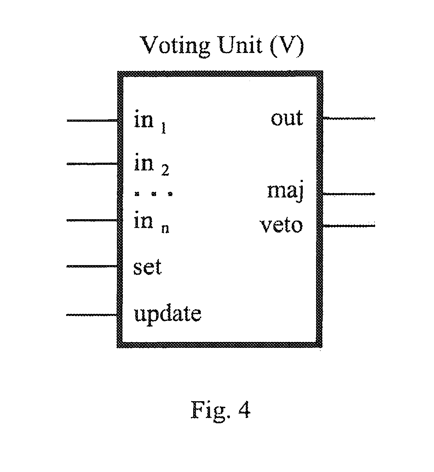

Ein Ausführungsbeispiel der Auswahleinheit 60 ist schematisch in Fig. 4 gezeigt. Die Auswahleinheit oder Abstimmungseinheit 60 hat n $\geq$ 3 (typisch einige hundert) Symboleingänge, einen Symbolausgang OUT und zwei numerische Ausgänge, MAJORITY und VETO.

Der Ausgang OUT liefert das Symbol, das am Eingang am häufigsten vertreten ist, wobei der unbestimmte Wert $\perp$ ignoriert wird. Der Ausgang ist also nur dann $\perp$, wenn alle Eingänge $\perp$ sind.

In Pattsituationen kann irgendeiner der in Frage kommenden Werte geliefert werden, oder auch $\perp$.

Der Ausgang IVIAJORITY liefert die Stimmenzahl des Mehrheitssymbols und der Ausgang VETO liefert die Anzahl der Gegenstimmen. Der Wert $\perp$ wird als Enthaltung nicht mitgezählt.

| 1 2 3 4 5 | OUT | MAJORITY | VETO |
|---|---|---|---|
| ⊥⊥⊥⊥⊥ | ⊥ | 0 | 0 |
| ⊥a⊥⊥⊥ | a | 1 | 0 |
| ⊥aa⊥a | a | 3 | 0 |
| a a b c d | a | 2 | 3 |
| ⊥aaba | a | 3 | 1 |

Tabelle 1

Die Eingänge SET und UPDATE dienen der Eingabe von Referenzbeispielen.

(3) Die Musterverarbeitungsvorrichtung

Die in Fig. 2 dargestellte Musterverarbeitungsvorrichtung 100 (Pattern Engine, PE) besteht aus n Eingangsstufen 50, einer Auswahleinheit 60 zwei Komparatoren 62 und noch einem Logikgatter 64.

Die Anzahl der Eingänge kann dynamisch geändert werden, sie muss nicht von Anfang an festgelegt sein. Eine neue Eingangsstufe 50 kann jederzeit hinzugefügt werden. Umgekehrt kann eine einzelne Eingangsstufe 50 entfernt werden, ohne das Gesamtsystem wesentlich zu beeinträchtigen.

Wenn UPDATE auf true liegt, wird der Eingang SET nach OUT durchgereicht. Die Ausgänge MAJORITY und VETO werden auf n, bzw. 0 gezwungen. Damit wird dann der Wert an SET auch in die Speichereinheiten zurück geschrieben.

Der Begriff VETO bezieht sich zunächst einmal auf den Ausgang der Auswahleinheit 60. Das Veto einer einzelnen Eingangsstufe 50 bedeutet, dass der Ausgang der Eingangsstufe vom MAJORITY Ausgang (= SET Eingang) abweicht.

(4) Anwendung der Musterverarbeitungsvorrichtung zur Mustererkennung

Auf dem Fachmann bekannte vorbereitende Schritte wie etwa die Entfernung des DC-Anteils mit einem Hochpassfilter oder eine Kontrastreaeluna (Standard verfahren der Bildverarbeitung) wird hier nicht weiter eingegangen. Darüber hinaus wird hier das Segmentierungsproblem nicht behandelt, Es wird davon ausgegengen, dass die Bilder bereits in Rechtecke (Bounding Box, Bbox) zerlegt sind, die jeweils nur ein Zeichen enthalten.

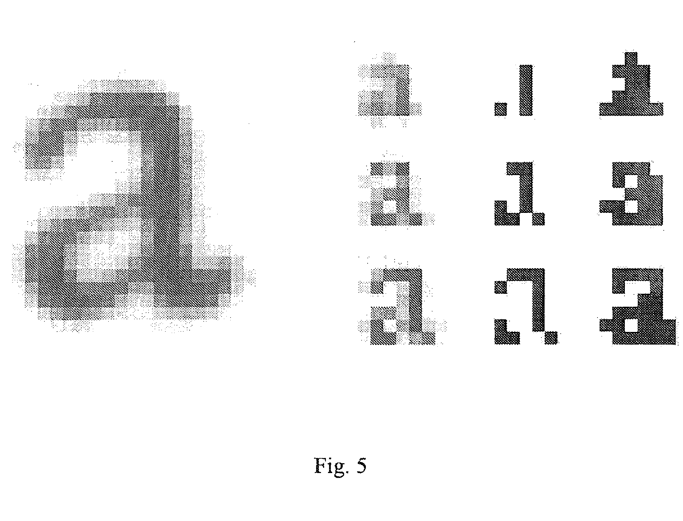

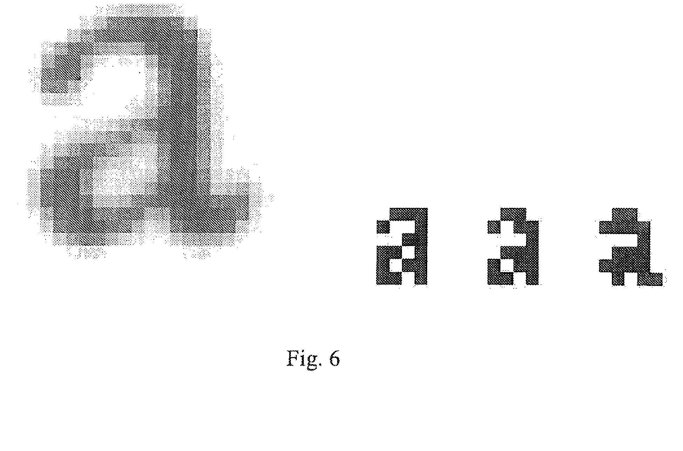

Die Eingangsdaten sind kleine, rechteckige Graustufenbilder wie in etwa in Fig. 5 und 6 links dargestellt. Die Menge aller Graustufenbilder mit bspw. 256 Grauwerten und z.B. 38x44 Pixeln ist bereits nicht mehr kontinuierlich, sondern bildet schon einen diskreten Raum, in dem sich Gleichheit und Ungleichheit leicht feststellen läßt. Diese Eigenschaft ist jedoch von geringem Nutzen, da man niemals zwei exakt gleiche Bilder produzieren wird. Diese Variabilität der Eingangsdaten hat viele Ursachen:
- Die Ausrichtung der ganzen Seite kann variieren. ( affine Transformation)
- Eine Kissenverzerrung ist ein Beispiel für eine allgemeinere Verzerrung.
- Die Beleuchtung ist ungleichmäßig.
- Das Papier wellt sich und hat Flecken.
- Die genaue Position und Größe der Box kann nicht exakt festgelegt werden, ebenso wenig die Lage des Zeichens innerhalb der Box.
- Bei geringer (nicht zu geringer) Auflösung des Sensors treten Aliasing-Effekte auf.
- Die Drucktypen sind unterschiedlich stark abgenutzt, Haarstriche können abgebrochen sein.
- Die Menge der Druckerschwärze schwankt, die Öffnung in einem 'e' kann zugeschmiert sein.
- Innerhalb einer Fontfamilie gibt es mehr oder weniger ausgeprägte Detailunterschiede.

Tabelle 2

| Schritt | N | Kommentar |
|---|---|---|
| 0 | 1 | Ausgangsbild |
| 1 | 5 | 1 5 Leichte Verschiebungen |
| 2 | 25 | Drehungen um -2.-1,0,1,2 Grad |

(fortgesetzt)

| Schritt | N | Kommentar |
|---------|------|-------------------------------------------------------|
| 3 | 50 | Skalierungen auf 7x8 und 8x7 Pixel |
| 4 | 1000 | Schwellwertoperationen mit verschiedenen Schwellwerten |

Statt wie im Stand der Technik diese Variabilität durch Normierung zu vermindern, wird sie durch folgenden beispielhaften Ablauf (Tabelle 2), sogar noch vergrößert. Auf das Bild eines Zeichens werden der Reihe nach die in Tabelle 2 aufgeführten Transformationen angewendet, die aus dem einen Ausgangsbild eine wachsende Zahl von Varianten des Eingangsbildes erzeugen.

Wenn sich zwei Bitmuster in mindestens einem Bit unterscheiden, sind sie verschieden, und es kommt nicht darauf an, ob es nur ein einziges unterschiedliches Bit oder 40 unterschiedliche Bits sind. Daher bieten sich Hashing-Techniken zur Realisierung der Eingangsstufen an.

Echtzeit-Lernen:

Was geschieht nun, wenn sich das Kamerabild des Eingangsmusters etwas verschiebt?

Wenn die Verschiebung sehr gering bleibt, etwa 1/100 mm, ändert sich keine der Bitmaps, und das Ausgangssymbol 'G' bleibt mit 100,0% Mehrheit stabil.

Wenn die Verschiebung anwächst, wird irgendeine Bitmap als erste ihren Zustand wechseln, der Ausgangszustand der zugeordneten Eingangsstufe wechselt nach ⊥. In diesem Augenblick wird der Update-Ausgang aktiv und die Mehrheit wird wieder auf 100,0% erhöht.

Wenn aber eine einzige ( bzw. einige wenige, VETO_THRESHOLD ) der Bitmaps einem anderen Symbol zugeordnet ist, kann die Mehrheit nicht vergrößert werden. Auf diese Weise ist verhindert, dass sich ein Symbol unbegrenzt in den Speichereinheiten ausbreiten kann.

Offline-Lernen:

Nach der Eingabe von z.B. 10 Referenzmustern für jedes Ausgangssymbol werden den Eingangs-Quantisierern der Reihe nach Hunderttausende von Zeichen-Boxen zahlreicher Textseiten präsentiert. Viele davon werden bereits - trotz sehr kleiner Mehrheiten - richtig erkannt.

Bei einigen wird MAJORITY_THRESHOLD überschritten, ohne dass ein Veto vorliegt, und die Zahl der Einträge in den Speichereinheiten wächst.

Bei einem erneuten Durchlauf wird die Schwelle dann auch an Stellen überschritten, die beim ersten Durchlauf unter der Schwelle geblieben sind.

Nach wenigen Schritten werden häufige Zeichen mit 99% - Mehrheiten erkannt. Wenn der Vorgang ins Stocken gerät, oder Fehler auftreten, kann über den SET-Eingang nachgeholfen werden.

Die Skalierungsoperation bildet den Wert eines Pixels als Mittelwert benachbarter Pixel. Das läßt sich als lineare Abbildung beschreiben.

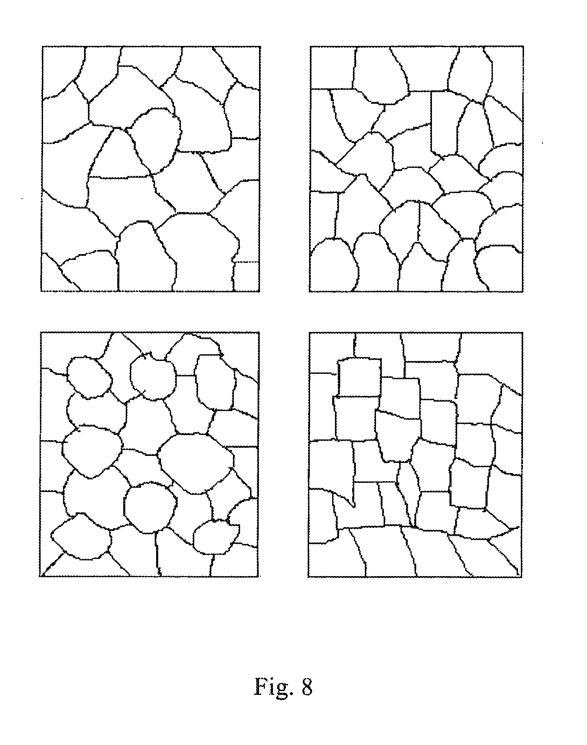

Die Verschiebungen und Drehungen sind ebenfalls lineare Operatoren, so dass die 50 Abbildungen, die das Eingangsbild von Schritt 0 in die 50 Bilder von Schritt 3 überführen, allesamt lineare Abbildungen von $R^{38x44}$ nach $R^{56}$ sind, die sich leicht unterscheiden. Die Beschränkung auf lineare Abbildungen ist aber nicht relevant. Welche Abbildungen man benutzt ist in weiten Grenzen gleichgültig. Interessant sind zum Beispiel Mittelwertbildungen über unregelmäßig geformte rezeptive Felder, die das Eingangsbild überdecken. Die Vielfalt entsteht dann dadurch, dass diese Aufteilungen auf viele verschiedene Arten vorgenommen werden kann. (Fig. 8)

Wichtig ist nur, dass der Eingangsraum mit einer ganzen Schar von unterschiedlichen Abbildungen in relativ kleine, diskrete Bildräume abgebildet wird, und dass diese Abbildungen lokal konstant sind.

Die Pattern-Engine bildet dann durch Verkleben verträglicher Abbildungen eine neue Abbildung, die auf größeren Bereichen lokal konstant ist.

Darin liegt auch der Schlüssel zum weiter unten beschriebenen rekursiven Aufbau eines hierarchischen Netzwerks von Pattern-Engines. Die höheren Schichten benutzen Kombinationen der Ausgangssymbole der niederen Schichten als Eingangssymbole.

Die Kombination aus linearer Abbildung und Schwellwertoperation lässt sich auch in folgender Richtung ver-allgemeinern:

Sei $v \varepsilon R^n$ ein Feature-Vektor, $w \varepsilon R^n$ normiert und $b \varepsilon R^n$ fest gewählt.

Dass ist f(v) = { 1, falls <v-b,w> $\geq$ 0, und 0 sonst } ein grober Klassifikator, der nur angibt, auf welcher Seite der Hyperebene { x $\varepsilon$ R$^n$ | <x-b,w> = 0 } der Punkt v liegt.

Mit 20 fest gewählten Hyperebenen erhält man eine lokal konstante Abbildung nach {0,1}20.

Viele unterschiedliche Abbildungen dieser Art bilden wieder eine geeignete Eingangsbeschaltung der Pattern-Engine.

Die Eingangsstufen 50 werden durch eine Vielzahl unterschiedlicher Diskretisierungsabbildungen (Quantisierer) gebildet.

Wenn ein Referenzmuster am Eingang angelegt wird, erscheinen zahlreiche unterschiedliche Symbole an den Eingängen $in_1$, $in_2$, ..., $in_n$. Über die Eingänge (SET, UPDATE) wird ein Ausgangssymbol (a') zugeordnet. Wenn UPDATE wieder auf false geht, bleibt der Ausgang mit einer 100% - Mehrheit stabil.

Der Reihe nach können nun weitere Referenzmuster für die diversen Symbole präsentiert werden, die am Ausgang erscheinen sollen.

Wenn sich die Eingangssymbole nun nicht alle gleichzeitig verändern, geht einer der Ausgänge der Eingangsstufen 50, etwa $OUT_4$, als erster nach $\perp$. In dieser Situation wird der UPDATE Ausgang aktiv, und es wird ein ‚a' in alle Eingangsstufen 50 zurückgeschrieben, was nur für die vierte Eingangsstufe $50_4$ einen Unterschied macht.

Auf diese Weise wächst die Karte der Außenwelt, die in den Eingangsstufen codiert ist; es findet ein Lernvorgang statt.

Wenn man in die Nähe eines anderen Symbols kommt, taucht irgendwann ein anderes Symbol an einem der $OUT_k$ auf. Dieser Punkt ist kein innerer Punkt der "Menge aller ‚a', sondern ein Grenzpunkt. Der VETO Ausgang verhindert in diesem Fall jede Aktualisierung.

Der naheliegende Versuch, etwa nur die unbekannten Einträge aufzufüllen, führt zum völligen Versagen des Systems. Die Ausgänge MAJORITY und VETO werden beide benötigt.

Typische Werte für MAJORITY_THRESHOLD und VETO_THRESHOLD sind etwa n/2 und 0.

Plausibilität:

- Wenn MAJORITY den Wert n/2 erreicht, kann die Mehrheitsentscheidung durch weitere Einträge in den Speichereinheiten nicht mehr kippen
- Ein einziges Veto zeigt die Nähe der Grenze an

Das bedeutet nicht, dass die $\perp$ - Lücken in den Eingangsstufen gar nicht aufgefüllt würde und die Mehrheit sich nicht verbessern kann, es wird halt nur auf anderen Wegen - bei anderen Eingangsmustern - geschehen. In hochdimensionalen Räumen ist der Zusammenhang (Kohäsion) stark, es gibt viele Wege von einem Punkt zum anderen.

Man kann MAJORITY_THRESHOLD und VETO_THRESHOLD auch von den Häufigkeiten der Symbole in den Speichereinheiten abhängig machen. Seltene Symbole hätten es dann leichter, sich auszubreiten.

Das Zusammenspiel zwischen Mehrheitsregel und Veto-Regel kann auch als Minimierung der Entropiezunahme interpretiert werden. Der Häufigkeitsverteilung der Symbole am Eingang der Auswahleinheit kann ihre Shannon-Entropie ( - $\Sigma$ $p_i$ log $p_i$ ) zugeordnet werden. Ein einstimmiges Ergebnis hat die Entropie 0, eine einzige Gegenstimme lässt die Entropie positiv werden.

Weil auch das unbestimmte Symbol $\perp$ vorkommen kann, ist die Entropie allerdings nicht exakt bekannt.

Wenn aber 99 von hundert Eingängen ein a zeigen, und ein Eingang unbekannt ist, kann die Entropie nur zwischen 0 und 0.0808 Bit liegen, und der Wert 0 ist viel wahrscheinlicher.

Wenn dagegen nur 30% a vorliegen, und der Rest unbekannt ist, kann die Entropie zwischen 0 (alles ‚a') und 5.17 Bit liegen. Der letztere Fall läge vor, wenn alle 70 fehlenden Ausgänge 70 verschiedene Symbole zeigen würden. Für 70% a und 30% b' wäre die Entropie 0.88 Bit.

Veto-Regel und Mehrheitsregel sorgen dafür, den UPDATE Ausgang nur dann zu aktivieren, wenn die zu erwartende Entropiezunahme mit hoher Wahrscheinlichkeit Null, oder zumindest sehr klein ist.

Das Nebeneinander der Speichereinheiten kann auch durch eine zeitliche Abfolge (beispielsweise zur Spracherkennung) ersetzt werden:

In der Sequenz a a a a a a a a a a a a $\perp$ a a a a a a a a kann die Lücke aufgefüllt werden.

In der Sequenz a a a a a a a a a a b a a $\perp$ a a a a a a a a wird das durch ein Veto verhindert.

Mehrheit und Veto lassen sich aber dann sehr einfach mit einem Vergleich aufeinanderfol-gender Symbole und zeitlicher Integration des Ausgangssignals gewinnen, wobei das Veto zum Zurücksetzen des Integrators führt. Wenn das aufintegrierte MAJORITY-Signal eine Schwelle überschreitet, wird der Wert a in die Eingangsstufe zurückgeschrieben. Die Vielzahl der nebeneinanderstehenden Diskretisierungsabbildungen ist dann durch zeitlich veränderliche Abbildungen ersetzt, Alles andere bleibt gleich.

Tabelle 3

| Vergleicher | | | |
|---|---|---|---|
| $IN_k$ | $IN_{k+1}$ | MAJORITY | VETO |
| ⊥ | ⊥ | 0 | 0 |
| a | ⊥ | 1 | 0 |
| a | a | 2 | 0 |
| a | b | 0 | 1 |

Oder noch einfacher:

Tabelle 4

| Vergleicher | | |
|---|---|---|
| INk | INk+1 | OUT |
| ⊥ | ⊥ | 0.0 |
| a | ⊥ | 0.3 |
| a | a | 1.0 |
| A | b | -8.0 |

Wenn das aufintegrierte OUT-Signal die Schwelle 0,5 überschreitet, wird der UPDATE-Eingang aktiviert.

(5) Beispiel: Anwendung auf das OCR - Problem

Eingangseitig werden Bilder mit (z.B.) 20x20 Pixeln und 256 Graustufen präsentiert Die Verwendung von $2^{400*256}$ Symbolen verbietet sich natürlich. Statt dessen werden Mittelwertbildung und Schwellwertoperatoren kombiniert, um viele kleine Bitmaps aus dem Eingangsbild zu gewinnen.

Der Wert eines Pixels im skalierten Bild ist ein Mittelwert aus benachbarten Pixeln des Eingangsbildes.

Figur 5 zeigt Graustufen 5x6, 6x7, 7x8 des Eingangsbildes "a" (links) mit verschiedenen Schwellwertoperationen

Figur 6 zeigt eine Skalierung 5x6 des Eingangsbildes "a" (links) mit festen Schwellwert und Drehung des Originalbildes um +/- 1°

Das Problem der korrekten Wahl des Schwellwerts stellt sich nicht, weil man ohnehin zu einem Eingangsbild mehrere Bitmuster bildet, die sich bei Variation des Schwellwerts ergeben können. Statt eines Schwellwertvergleichs kann man auch eine Vielzahl von Komparatoren zwischen die Ausgänge der Mittelwertberechnungen schalten, wie im Audio-Beispiel beschrieben.

Statt der Skalierungsoperationen kann man auch Mittelungen über unregelmäßig geformte "rezeptive Felder" benutzen. Gröbere Aufteilungen entsprechen dann einer stärkeren Verkleinerung. Auch hier ist wichtig, dass mehrere Schwellwerte und mehr als eine Aufteilung in rezeptive Felder parallel benutzt werden. Die Skalierungsoperationen erlauben allerdings eine anschauliche Interpretation der Symbole als Bitmaps.

Das erfindungsgemäße Verfahren "lebt" von der Vielfalt am Eingang.

Ausgehend von wenigen Referenzbeispielen füllen sich die Speichereinheiten rasch auf, in einem 5x6 - Raster gibt es nur einige Tausend gute $\alpha$-Muster. Die Trennung von 'b' und 'h' ist bei dieser Auflösung dagegen schwieriger. Zumindest bei einigen Schwellwerten gibt es Überschneidungen, die als Veto die Auffüllung der Speichereinheiten verhindern. Das häufige Veto zeigt an, dass zu wenig Information zur Trennung b/h vorhanden ist. Die Zahl der 'b' und die Zahl der 'h' - Einträge bleibt klein.

Die einfachste Abhilfe besteht darin, die strittigen Speicherstellen fest auf ⊥ zu setzen. Sie nehmen dann keine neuen Symbole an. Da das Veto entfällt, besteht die Chance, dass doch noch mit guten Mustern aufgefüllt wird.

Interessant ist die folgende kategorielle Eigenschaft der Eingangsbeschaltung:

Die Bilder der Projektionen von V in die diskreten Räume X sind klein, und der gesuchte Klassifikator $X : V \rightarrow S$ faktorisiert in etwa über $X_i$ .

$$V \dashrightarrow S$$
$$\downarrow \nearrow$$
$$X_i$$

Da die Bilder in den $X_i$ klein sind, kann man mit kleinen Speichereinheiten auskommen. Nach einiger Zeit treten keine neuen, ( auf $\perp$ abgebildeter ) Muster auf ("faktorisiert über X", bedeutet, dass nicht zu viel Information verloren geht und die Klasse des Urbilds an seinem Bild in $X_i$ meist noch erkennbar bleibt). Die Parallelschaltung verschiedener Projektionen bewirkt, dass gelegentliche Kollisionen ohne Folgen bleiben.

Ob diese Bedingung erfüllt ist, lässt sich aber sehr einfach am Verhalten der PE ablesen:

- Wenn ein $X_i$ zu groß ist, wächst die Zahl der in M gespeicherten Symbole zu stark an, der UPDATE Ausgang ist fast immer aktiv, wenn sich am Eingang etwas verändert.

- Wenn ein $X_i$ zu klein ist, werden oft Symbole überschrieben, oder die Erweiterung wird durch häufige Vetos blockiert, d.h. der Ausgang von $M_i$ weicht oft von der Mehrheitsentscheidung ab.

Zu kleine $X_i$ werden dann durch Bildung eines kartesischen Produkts mit einem $X_j$ vergrößert, die Zahl der Speichereinheiten sinkt.

Für $S_{in} = \{$ 0000 = $\perp$, 0001,0010, 0011, 0100, ... , 1111 $\}$ ist das einfach das Nebeneinanderstellen der Bitmuster. Lediglich das Symbol $\perp$ verlangt eine Sonderbehandling: Wenn eine der Komponenten gleich $\perp$ ist, sollte das resultierende Symbol auch gleich $\perp$ sein.

Zu große $X_i$ werden durch Projektionen auf zwei oder mehr kleinere Räume aufgeteilt, die Anzahl der Speichereinheiten wächst.

Für $S_{in} = \{$ 0000 = $\perp$, 0001,0010, 0011, 0100, ... , 1111 $\}$ ist das z.B. eine Aufteilung der Bits in Teilmengen.

Auch hier verlangt das Symbol $\perp$ eine Sonderbehandling: Es sollte auf $\perp$ abgebildet werden. Umgekehrt sollte $\perp$ nicht als Bild auftreten, wenn das Urbild von $\perp$ verschieden war.

Wie das Experiment zeigt, kommt es auf die Details gar nicht so sehr an.

Wenn man der Produktbildung einige zufällige (!) Projektionen nachschaltet, funktioniert es auch. Was in der einen Projektion nicht unterscheidbar ist, bleibt in einer anderen getrennt. Solche Zufallsprojektionen erhält man z.B. durch Anwendung einer gut mischenden Hashfunktion, gefolgt von Bitmaskierungen.

Für einen fest gewählten Raum $X_i$ können manche Symbole gut getrennt werden andere schlecht. Beispiel: Bei einer 6x5 - Skalierung mit festem Schwellwert ist das 'a' sehr charakteristisch, während 'b' und 'h' schwer zu trennen sind. Wenn einfach Bits zum Eingangsraum hinzugefügt werden, wird der Speicherbedarf unnötig vergrößert, obwohl nur das Ausgangssymbol b/h betroffen ist. Die Verwendung von Zufallsprojektionen nach der Produktbildung verhindert das uferlose Ansteigen des Speicherbedarfs.

Im OCR-Beispiel sind z.B. Aufteilungen des Bildes in Kacheln oder Bitmaskierungen in den Bitmaps geeignete Projektionsabbildungen. Umgekehrt ist die Zusammenfassung von Pixeln zu einem 4x4 - Bild eine injektive Abbildung in das kartesische Produkt der Einzelpixel-Räume. Die Quantisierer am Eingang sind auch nur Spezialfälle dieser Konstruktion.

| Produktbildung | |
|---|---|
| in1 | out |
| in2 | |
| in3 | |

| Projektion | |
|---|---|
| in | out |

Tabelle 5

Produktbildung und Projektionen können durch ein Schaltelement bewirkt werden, bei dem diese beiden Operationen nicht klar getrennt sind. Dieser kann als Symbol-Mischer (in Tabelle 5 ein 2:4 - Mischer) bezeichnet werden. Er bildet ein Element des Produktes von n kleinen Räumen in ein Element des Koproduktes von m anderen kleinen Räumen ab. Die Verwendung wird im Abschnitt "komplexe Netzwerke" im Detail erläutert.

Es kann auch eine Verzögerung des Eingangssymbols vorgesehen werden. Es erscheint dann nach einer Verzögerungszeit am Ausgang. Die Verzögerung muss nicht für alle Schaltelemente gleich sein, auch das erhöht die Vielfalt und erleichtert das Verkleben der Karten. Die Einbeziehung von Verzögerungselementen ermöglicht das Lernen zeitabhängiger Muster.

Tabelle 6

| Delay | |
|-------|-----|
| in | out |
| delay = 20 ms | |

Die Funktion eines solchen, schematisch in Tabelle 6 dargestellten Schaltelements kann von den Eingangsstufen selbst übernommen werden, wenn man ihnen eine endliche Reaktionszeit zuschreibt.

(6) Beispiel: Anwendung auf Spracherkennung

Das Eingangs-Audiosignal wird auf eine Filterbank aus 24 (16 bis 32) Bandpassfiltern zweiter Ordnung geleitet. Als Ausgangssignal dient aber nicht die Auslenkung sondern ein Maß für die im Filter gespeicherte Energie - eine quadratische Form in den zwei Zustandsgrößen

($E_{kin}$+ $E_{pot}$ bei einem Masse-Feder-System)

Daraus lassen sich mit zahlreichen Komparatoren, die zwischen je zwei Ausgänge geschaltet werden, Projektionen in Räume der Größe 8 bis 32 Bit gewinnen. Hinter (oder auch vor, 1 bit -Signale) den Projektionselementen können auf vielfältige Weise Verzögerungselemente eingefügt werden. Sie erlauben dann die Erkennung von frequenz- und zeitabhängigen Mustern.

Insgesamt erhält man so die erforderliche Vielfalt am Eingang der Musterverarbeitungsvorrichtung.

(7) Komplexe Netzwerke

Die Anwendung auf Schrifterkennung kann mit einer einzigen Musterverarbeitungsvorrichtung (Pattern Engine) auskommen. Sie bildet - nach geeigneter Wahl der $X_i$, d.i. - nach Wahl der Diskretisierungsabbildungen, die Eingangsmuster direkt auf das gewünschte Symbol ab. Die Erkennungsleistung kann aber nicht beliebig gesteigert werden. Dazu ist der Aufbau eines Netzwerks aus Pattern Engines notwendig. Dieses mehrstufige Netzwerk wird als "System" bezeichnet.

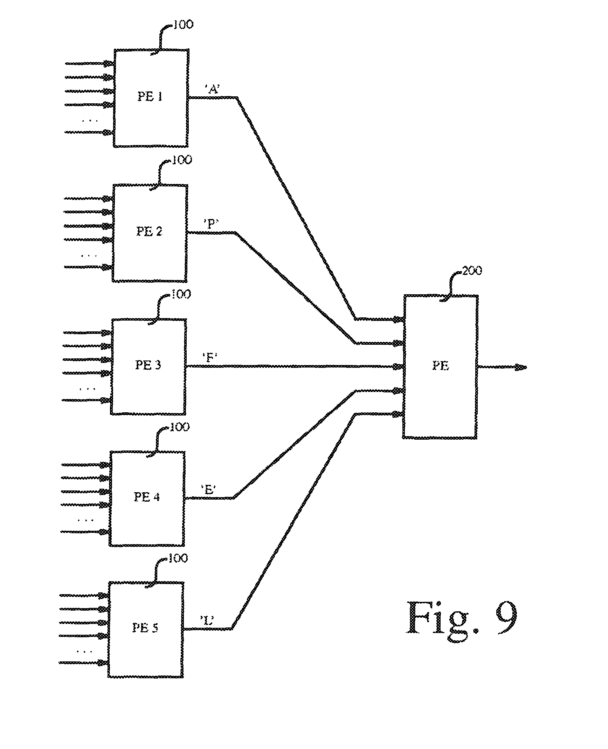

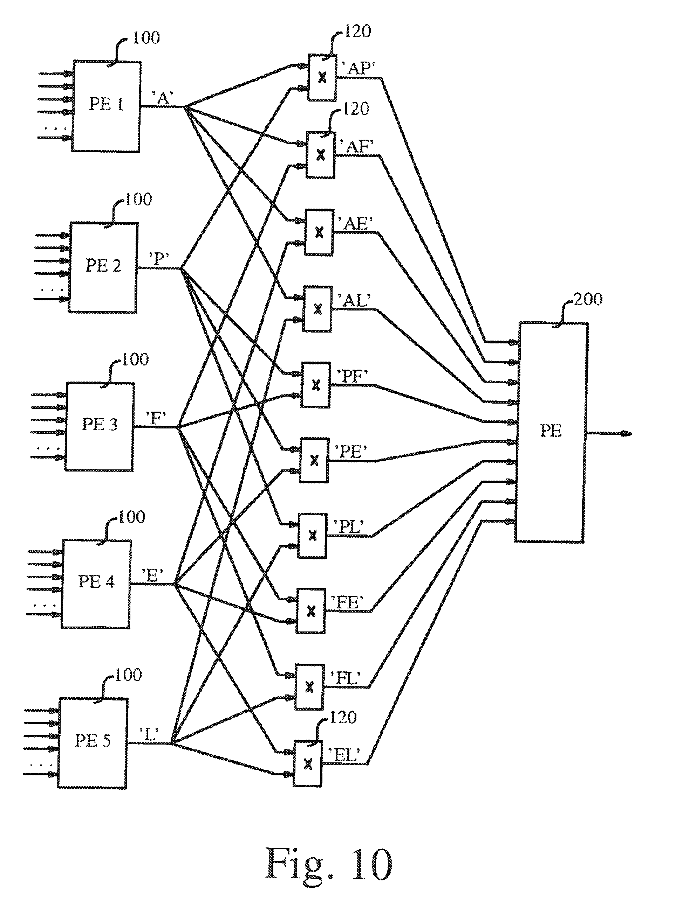

Fig. 9 zeigt schematisch ein erstes und Fig. 10 ein zweites Ausführungsbeispiel einer erfindungsgemäßen zweistufigen Musterverarbeitungsvorrichtung. Die Symbolausgänge der Musterverarbeitungsvorrichtungen erster Stufe (100) sind entweder direkt (Fig. 9) oder - zur Ermöglichung einer größeren Vielfalt der Eingangsmustervarianten - über Mischer (120) mit den Mustereingängen der Musterverarbeitungsvorrichtung zweiter Stufe (200) verbunden.

Besondere Eigenschaften der Pattern Engine, die insbesondere bei zwei- oder mehrstufigen Musterverarbeitungsvorrichtungen von Nutzen sind:

1. Die Typen von IN, OUT und SET sind Symbole. Da die Symbolmengen nicht starr festgelegt sein müssen, können PEs auf vielfältige Weise verschaltet werden. Die Verschaltung kann dynamisch verändert werden.

2. Die Anzahl der Eingänge kann dynamisch geändert werden, eine neue Speichereinheit beginnt sofort, sich mit nützlichen Informationen zu füllen (Lernvorgang). Der Wegfall einer Speichereinheit macht das System nicht funktionsunfähig.

3. Die Codierung der Eingangssymbole kann dynamisch geändert werden.
Beispiel:
Einer der Bitmap-Eingänge wird invertiert (Schwarz ↔ Weiß). Die Einträge in der Speichereinheit sind dann komplett nutzlos. Sie kann geleert werden, alles wird wieder auf ⊥ abgebildet. Der Lernvorgang füllt die Einheit rasch wieder auf.

4. Die Aufteilung einer Eingangs-Symbolmenge durch Projektionen lässt das System funktionsfähig. Es fällt eine Eingangsstufe weg, die durch zwei neue, leere Eingangsstufen ersetzt wird. Der Lernvorgang füllt beide rasch wieder auf.

5. Wenn bei den Punkten 3, 4 die Transformation explizit bekannt ist, kann man den Inhalt der Eingangsstufe auch in die neue Codierung umrechnen. Das geht schneller, aber nicht unbedingt besser.

6. Die Punkte 2, 3, 4 erlauben es, die Größe der Räume $X_i$ dynamisch anzupassen. Wenn eine Eingangsstufe ständig VETOs verursacht, ist der Eingangsraum zu klein oder der Ausgangsraum zu groß.

7. Es können jederzeit Rückführungen aus hierarchisch nachgelagerten Schichten (Jeff Hawkins, "On Intelligence") zu vorgelagerten Schichten hinzugefügt werden. Ein rückgeführtes Signal einfach an einen der Eingänge der Pattern Engine anzuschließen, ist allerdings nicht sinnvoll. Die Mehrheitsentscheidung wird sich dadurch kaum ändern. Es ist sinnvoller, viele (alle) Eingangssignale mit dem rückgeführten Signal zu mischen. Die Eigenschaften 2, 3, 4 sorgen dafür, dass dieser Vorgang schrittweise erfolgen kann, beginnend mit einem Eingang. Am Ende sind alle Eingänge mit Mischern versehen, und dann hat das System gelernt, das rückgeführte Signal (eine Erwartung) zu berücksichtigen. Weil die Mischer auch eine Art Verschlüsselung bewirken, wird das "Reverse Engineering" allerdings erschwert.

8. Ebenso wie bei 7. können Signale in Vorwärtsrichtung eine Schicht überspringen.

9. Die Punkte 7. und 8. führen dazu, dass die Trennung der Hierarchiestufen verschwimmt. Das "Reverse Engineering" wird erschwert.

10. Die rückgeführten Symbole können verzögert sein (Delay-Baustein). Nach der Integration der Mischer (7) reagiert das System dann auf bekannte Raum-Zeit-Muster

11. Wenn die Verzögerung zu kurz ist, bringt sie keine neue Information. Wie bei (3) kann die Verzögerung dynamisch verändert werden, die Einträge in den Speichereinheiten passen sich an

12. Wie bei Punkt 7 können auch Symbole verarbeitet werden, die aus der Verarbeitung ganz anderer Eingangsstufen entstanden sind, die etwa Lagesensoren oder eigenen, motorischen Absichten zugeordnet sind

13. Wenn die der Eingangsstufe folgenden PE's zu gut arbeiten, erscheint an den Eingängen der nachgelagerten PE's eventuell zu wenig Vielfalt, der Lernprozeß kommt nicht in Gang. Dann kann die Vielfalt am Eingang erhöht werden, etwa durch leichtes Verwackeln/Verzerren des Eingangsbilds (Augenbewegungen, Sakkaden, Bewegungen allgemein) oder gar Quantisierungsrauschen

14. In höheren Hierarchiestufen könnten periodische Vorgänge (Hirnwellen) und Zufallsmuster diese Rolle übernehmen. Die Einspeisung von Zufallssymbolen verbessert auch den Ablauf der unter Punkte 2 bis 7 beschriebenen Vorgänge.

15. Im OCR-Beispiel wurden die Symbole explizit vorgegeben. Die Symbole in der Zwischenschicht eines zweistufigen Systems (Visuelles Areal V1 + eine weitere Schicht) können zum Beispiel Symbole für grafische Morpheme wie gerade, rundlich, eckig, spitz in Kombination mit Orientierungsinformationen wie senkrecht, waagerecht, links, rechts sein.

16. Die Symbole der Zwischenschicht können auch wie folgt zu Stande kommen: Beim Einspeisen der Beispielmuster wird das gewünschte Ausgangssymbol an alle Set-Eingänge aller PE's gelegt. In der zweiten Schicht ist das Eingangssymbol zunächst $\perp$, so dass nichts gespeichert wird. Sobald die Ausgänge der ersten Schicht sich stabilisieren, wird auch in der zweiten Schicht das gewünschte Symbol gespeichert. Da die Eingangsräume der ersten Schicht aber zu klein sind, werden entweder schon beim Anlegen der Referenzmuster oder spätestens bei Variation der Eingangsmuster Konflikte auftreten, die die Erweiterung in der ersten Schicht (und indirekt auch der zweiten Schicht) blockieren. Statt nun wie bei 6. den Eingangsraum zu modifizieren, kann auch die Unterscheidung zwischen den Referenzsymbolen in dieser Eingangsstufe aufgegeben werden (Verkleinerung des Ausgangsraumes). Die Mehrheit verbessert sich, das Veto verschwindet. In der zweiten Schicht und den anderen Eingangsstufen passiert nichts.

(Beispiel: sehr ähnliche Buchstaben, die sich nur in einem lokalen Detail unterscheiden) Das läuft auf das vorübergehende Ignorieren des Vetos für diese zwei Symbole hinaus. Die technische Realisierung könnte ein "attack-decay-Fifter" sein, das langanhaltende Vetos in ihrer Gewichtung herabstuft.

17. Alternativ können die Symbole der Zwischenschicht durch Anlegen eines Zufallssymbols am "set" - Eingang des Musterverstärkers und gelegentliche Impulse am UPDATE - Eingang erzeugt werden. Auch dann kommt der Lernvorgang in Gang. Später führt die Anwendung von 3. bis 7. zur Ausmerzung irrelevanter Symbole.

Zusammenfassend ist Gegenstand der vorliegenden Erfindung die Konstruktion einer musterverarbeitenden/ mustererkennenden Maschine, die aus einer Vielfalt von zeitabhängigen, symbolischen Eingangssignalen immer vollständigere Karten der Außenwelt zusammensetzt. In ihrer Gesamtheit bewirken diese Karten eine rasche, zuverlässige und robuste Musterverarbeitung, d.h. eine Abbildung auf ein Ausgangssymbol.

Es werden n (n $\geq$ 3 , typisch hundert) Eingangsstufen mit einer Abstimmungsprozedur kombiniert, wobei das Ergebnis einer Mehrheitsentscheidung unter bestimmten Bedingungen auf die Setz-Eingänge der Eingangsstufen zurückgeführt wird, was zur Vervollständigung der Karten führt.

Das erfindungsgemäße Verfahren zur Musterverarbeitung und Musterverarbeitung kann Muster in Echtzeit, mit sehr hoher Genauigkeit und sehr geringem Rechenaufwand, erkennen. In der Performance übertrifft diese Methode dabei deutlich die Hidden Markov Models (HMM's), die bisher State of the Art zur Musterverarbeitung waren.

Das Verfahren kann weiterhin Probleme des VLR-OCR (Very Low Resolution - OCR, auch HMM's) in Zusammenhang mit Erkennung von wirklich sehr kleinen Schriften sehr gut lösen.

**Patentansprüche**

1.  Verfahren zur Musterverarbeitung, welches einem aus quantisierten Abtastwerten bestehenden Eingangsmuster ein ausgewähltes Symbol aus einer endlichen, diskreten Symbolmenge zuordnet, aufweisend die Schritte:

    a) Diskretisieren des Eingangsmusters,
    b) Erzeugung einer Anzahl n diskreter Varianten des diskretisierten Eingangsmusteres gemäß festgelegten Regeln,
    c) Eingabe der n diskreten Eingangsmuster-Varianten als Eingangssymbole an die Mustereingänge ($S_{in}$) von n zugeordneten Speicherelementen (50),
    d) in jedem Speicherelement (50), Auslesen des an der durch das am Mustereingang ($S_{in}$) anliegenden Eingangssymbol bestimmten Speicherstelle gespeicherten Symbols als Ausgangssymbol an einem Ausgangsanschluss ($S_{out}$),
    e) Eingabe der n ausgelesenen Ausgangssymbole an n Eingangsanschlüsse ($in_1$,...., $in_n$) einer Auswahleinheit (60),
    f) durch die Auswahleinheit (60), Auswahl eines ausgewählten Symbols aus den von den n Speichereinheiten (50) zugeführten Ausgangssymbolen gemäß einer Abstimmungsregel und Ausgabe des ausgewählten Symbols an einem Ergebnisausgang (out).

2.  Verfahren nach Anspruch 1, ferner umfassend den Verfahrensschritt des Beschreibens der in Schritt c) ausgewählten Speicherstellen der n Speicherelemente mit dem ausgewählten Symbol oder mit einem durch einen Benutzer vorgegebenen Symbol aus der Symbolmenge in Abhängigkeit von der durch die Auswahleinheit (60) vorgenommenen Bewertung.

3.  Verfahren nach Anspruch 1 oder 2, wobei das Eingangsmuster ein räumlich variables Eingangsbild ist.

4.  Verfahren nach Anspruch 3, wobei die diskreten Varianten des diskretisierten Eingangsmusters in Verfahrensschritt b) jeweils durch Bildverarbeitungsoperationen wie beispielsweise Verschiebungen, Drehungen, Skalierungen und/ oder Schwellwertoperationen des Eingangsmusters erzeugt werden.

5.  Verfahren nach Anspruch 1 oder 2, wobei das Eingangsmuster ein zeitlich veränderliches Eingangssignal ist.

6.  Verfahren nach einem der Ansprüche 1 bis 5, wobei die Zuordnung des Ausgangssymbols in Verfahrensschritt e) jeweils durch einen Lernvorgang erlernt wird, der eine Rückkopplung des ausgewählten Symbols als ein Referenzsymbol an einem Symboleingang (set) der Speicherelemente (50) umfasst.

7. Verfahren nach einem der Ansprüche 1 bis 6, wobei die endliche diskrete-Symbolmenge ein Symbol mit der Bedeutung "unbestimmt" umfasst.

8. Verfahren nach einem der Ansprüche 1 bis 7, wobei die Bewertung durch die Auswahleinheit (60) in Verfahrensschritt e) eine Mehrheitsentscheidung umfasst.

9. Verfahren nach Anspruch 8, wobei bei der Mehrheitsentscheidung eine einfache Mehrheit der Symbole zur Bestimmung des ausgewählten Symbols ausreicht.

10. Verfahren nach Anspruch 8 oder 9, wobei bei der Mehrheitsentscheidung eine Anzahl von anderen zugeordneten Symbolen (Gegenstimmen) erfasst wird.

11. Verfahren nach einem der Ansprüche 1 bis 10, wobei Anzahl n von erzeugten diskreten Varianten des quantisierten Eingangsmusters dynamisch geändert wird.

12. Verfahren nach einem der Ansprüche 1 bis 11, wobei die Codierung der Eingangssymbole während des Verfahrensablaufs geändert wird.

13. Verfahren nach einem der Ansprüche 1 bis 12, wobei die Musterverarbeitung als mehrstufiges Verfahren ausgeführt wird, wobei ausgewählte Symbole einer ersten Verfahrensstufe als Eingangsmuster einer zweiten Verfahrensstufe dienen.

14. Verfahren nach Anspruch 13, wobei Erzeugung einer Anzahl n diskreten Varianten des diskretisierten Eingangsmusters in Verfahrensschritt b) der zweiten Verfahrensstufe durch Mischen von Ausgangssymbolen der ersten Stufe erfolgt.

15. Vorrichtung zur Musterverarbeitung, welche ausgebildet ist, einem aus quantisierten Abtastwerten bestehenden Eingangsmuster ein ausgewähltes Symbol aus einer endlichen diskreten Symbolmenge zuzuordnen, welche Vorichtung aufweist:

   - eine Diskretisierungseinrichtung zur Diskretisierung des Eingangsmusters
   - eine Einrichtung zur Erzeugung einer Anzahl n von diskreten Varianten des quantisierten Eingangsmusters gemäß festgelegten Regeln,
   - eine Anzahl n von Speicherelementen (50), die eingerichtet sind zum Auslesen des an der durch das an einem Mustereingang ($S_{in}$) anliegenden Eingangssymbol bestimmten Speicherstelle gespeicherten Symbols als Ausgangssymbol an einem Ausgangsanschluss ($S_{out}$)eine Auswahleinheit (60) mit n Eingangsanschlüssen ($in_1$,...., $in_n$) zum Einiesen der n ausgelesenen Ausgangssymbole,
   - welche Auswahleinheit (60) ausgebildet ist, ein ausgewähltes Symbol aus den von den n Speichereinheiten (50) zugeführten Ausgangssymbolen gemäß einer Abstimmungsregel auszuwählen und an einem Ergebnisausgang (out) auszugeben,

16. Vorrichtung nach Anspruch 15, wobei die Speicherelemente (50) und die Auswahleinheit (60) ferner ausgebildet sind, in Abhängigkeit von der durch die Auswahleinheit (60) vorgenommenen Bewertung, die ausgewählten Speicherstellen der n Speicherelemente mit dem ausgewählten Symbol oder mit einem durch einen Benutzer vorgegebenen Symbol aus der Symbolmenge zu beschreiben.

17. Vorrichtung nach Anspruch 15 oder 16, wobei die Speicherelemente (50) als Assoziativspeicher ausgebildet sind.

18. Vorrichtung nach Anspruch 15, 16 oder 17, wobei die Eingangsstufen (50) jeweils zusätzlich einen Referenzsymboleingang und einen Aktualisierungsaktivierungseingang aufweisen.

19. Vorrichtung nach einem der Ansprüche 15 bis 18, wobei die Auswahleinheit (60) ferner einen Symbolausgang, einen Ausgang zur Ausgabe eines Signals (majority), welches eine Anzahl des ausgwählten Symbols angibt und einen Ausgang zur Ausgabe eines Signals (veto), welches eine Anzahl anderer eingegebener Symbole angibt, aufweist.

20. Vorrichtung nach einem der Ansprüche 15 bis 19, wobei die Auswahleinheit (60) zusätzlich einen Referenzsymboleingang und einen Aktualisierungsaktivierungseingang aufweist.

**21.** Vorrichtung nach einem der Ansprüche 15 bis 20, welche als mehrstufige Musterverarbeitungsvorrichtung ausgebildet ist, wobei ausgewählte Symbole einer ersten Verarbeitungsstufe (100) als Eingangsmuster einer zweiten Verarbeitungsstufe (200) dienen.

**22.** Vorrichtung nach Anspruch 21, wobei Mischer (120) zum Mischen von Ausgangssymbolen der ersten Stufe (100) vorgesehen sind.

**23.** Computerprogramm, welches, wenn es auf einem Computersystem abläuft, das Verfahren nach einem der Ansprüche 1 bis 14 ausführt.

**24.** Datenträger, auf dem ein Computerprogramm nach Anspruch 23 gespeichert ist.

**Claims**

**1.** Process for pattern processing, which assigns to an input pattern consisting of quantized sampled values a selected symbol from a finite, discrete set of symbols, exhibiting the following steps:

   a) discretizing of the input pattern,
   b) generation of a number n of discrete variants of the discretized input pattern in accordance with established rules,
   c) input of the n discrete input-pattern variants as input symbols to the pattern inputs ($S_{in}$) of n assigned memory elements (50),
   d) in each memory element (50), reading out the symbol stored at the memory location defined by the input symbol applied at the pattern input ($S_{in}$) by way of output symbol at an output port ($S_{out}$),
   e) input of the n output symbols read out to n input perts ($in_1$, ..., $in_n$) of a selection unit (6C),
   f) by the selection unit (60), selection of a selected symbol from the output symbols supplied by the n memory units (50) in accordance with a voting rule and output of the selected symbol at a result output (out).

**2.** Process according to Claim 1, further including the process step of describing the memory locations, selected in step c), of the n memory elements with the selected symbol or with a symbol predetermined by a user from the set of symbols in a manner depending on the assessment performed by the selection unit (60).

**3.** Process according to Claim 1 or 2, wherein the input pattern is a spatially variable input image.

**4.** Process according to Claim 3, wherein the discrete variants of the discretized input pattern are generated in process step b) in each instance by image-processing operations such as, for example, displacements, rotations, scalings and/or threshold-value operations on the input pattern.

**5.** Process according to Claim 1 or 2, wherein the input pattern is a temporally variable input signal.

**6.** Process according to one of Claims 1 to 5, wherein the assignment of the output symbol in process step e) is learned in each instance by a learning procedure which includes a feedback of the selected symbol as a reference symbol at a symbol input (set) of the memory elements (50).

**7.** Process according to one of Claims 1 to 6, wherein the finite discrete set of symbols includes a symbol with the meaning "indeterminate".

**8.** Process according to one of Claims 1 to 7, wherein the assessment by the selection unit (60) in process step e) includes a majority decision.

**9.** Process according to Claim 8, wherein in the case of the majority decision a simple majority of the symbols suffices for determining the selected symbol.

**10.** Process according to Claim 8 or 9, wherein in the case of the majority decision a number of other assigned symbols (votes against) are registered.

**11.** Process according to one of Claims 1 to 10, wherein the number n of generated discrete variants of the quantized input pattern is amended dynamically.

12. Process according to one of Claims 1 to 11, wherein the coding of the input symbols is amended during the process sequence.

13. Process according to one of Claims 1 to 12, wherein the pattern processing is executed as a multi-stage process, wherein selected symbols of a first process stage serve as input patterns of a second process stage.

14. Process according to Claim 13, wherein the generation of a number n of discrete variants of the discretized input pattern in process step b) of the second process stage is effected by mixing output symbols of the first stage.

15. Apparatus for pattern processing, which is designed to assign to an input pattern consisting of quantized sampled values a selected symbol from a finite, discrete set of symbols, which apparatus exhibits:

   - a discretizing device for discretizing the input pattern
   - a device for generating a number n of discrete variants of the quantized input pattern in accordance with established rules,
   - a number n of memory elements (50) which have been set up for reading out the symbol stored at the memory location defined by the input symbol applied at a pattern input ($S_{in}$) by way of output symbol at an output port ($S_{out}$)
   - a selection unit (60) with n input ports ($in_1$, ..., $in_n$) for reading in the n output symbols read out,
   - which selection unit (60) is designed to select a selected symbol from the output symbols supplied by the n memory units (50) in accordance with a voting rule and to output it at a result output (out).

16. Apparatus according to Claim 15, wherein the memory elements (50) and the selection unit (60) are further designed to describe, in a manner depending on the assessment performed by the selection unit (60), the selected memory locations of the n memory elements with the selected symbol or with a symbol predetermined by a user from the set of symbols.

17. Apparatus according to Claim 15 or 16, wherein the memory elements (50) take the form of associative memories.

18. Apparatus according to Claim 15, 16 or 17, wherein the input stages (50) each additionally exhibit a reference-symbol input and an update-activation input.

19. Apparatus according to one of Claims 15 to 18, wherein the selection unit (60) further exhibits a symbol output, an output for outputting a signal (majority) that specifies a number of the selected symbol, and an output for outputting a signal (veto) that specifies a number of other symbols that have been input.

20. Apparatus according to one of Claims 15 to 19, wherein the selection unit (60) additionally exhibits a reference-symbol input and an update-activation input.

21. Apparatus according to one of Claims 15 to 20, which takes the form of a multi-stage pattern-processing apparatus, wherein selected symbols of a first processing stage (100) serve as input patterns of a second processing stage (200).

22. Apparatus according to Claim 21, wherein mixers (120) are provided for mixing output symbols of the first stage (100).

23. Computer program, which, when it runs on a computer system, executes the process according to one of Claims 1 to 14.

24. Data medium, on which a computer program according to Claim 23 is stored.

**Revendications**

1. Procédé de traitement d'échantillon, lequel attribue à un échantillon d'entrée se composant de valeurs de balayage quantifiées, un symbole sélectionné à partir d'une quantité finie, discrète de symboles, présentant les étapes suivantes :

   a) discrétisation de l'échantillon d'entrée,

b) production d'un nombre de n variantes discrètes de l'échantillon d'entrée discrétisé selon des règles établies,

c) entrée de n variantes discrètes d'échantillon d'entrée comme symboles d'entrée aux entrées d'échantillon ($S_{in}$) par n éléments de mémoire attribués (50),

d) dans chaque élément de mémoire (50), sélection du symbole enregistré au point de mémoire défini par le symbole d'entrée présent à l'entrée d'échantillon ($S_{in}$) comme symbole de sortie à une connexion de sortie ($S_{out}$),

e) entrée de n symboles de sortie sélectionnes à n connexions d'entrée ($in_1$, ..., $in_n$) d'une unité de sélection (60),

f) par l'unité de sélection (60), sélection d'un symbole sélectionné à partir des symboles de sortie amenés par les n unités de mémoire (50) selon une règle de détermination et édition du symbole sélectionné à une sortie de résultat (out).

2. Procédé selon la revendication 1, présentant en outre l'étape de description des points de mémoire sélectionnes à l'étape de procédé c) des n éléments de mémoire avec le symbole sélectionné ou avec un symbole prescrit par un utilisateur à partir de la quantité de symboles en fonction de l'évaluation entreprise par l'unité de sélection (60).

3. Procédé selon la revendication 1 ou 2, selon lequel l'échantillon d'entrée est une image d'entrée variable dans l'espace.

4. procédé selon la revendication 3, selon lequel les variantes discrètes de l'échantillon d'entrée discrétisé sont produites à l'étape de procédé b) respectivement par des opérations de traitement d'images comme par exemple des déplacements, des rotations, des cadrages et/ou des opérations de valeur seuil de l'échantillon d'entrée.

5. Procédé selon la revendication 1 ou 2, selon lequel l'échantillon d'entrée est un signal d'entrée variable dans le temps.

6. Procédé selon l'une quelconque des revendications 1 à 5, selon lequel l'attribution du symbole de sortie à l'étape de procédé e) est apprise respectivement par un procédé didacticiel, qui comprend un couplage rétroactif du symbole sélectionné en tant que symbole de référence à une entrée de symbole (set) des éléments de mémoire (50).

7. Procédé selon l'une quelconque des revendications 1 à 6, selon lequel la quantité discrète, finie de symboles comprend un symbole avec la signification « indéterminé ».

8. Procédé selon l'une quelconque des revendications 1 à 7, selon lequel l'évaluation par l'unité de sélection (60) à l'étape de procédé e) comprend une décision à la majorité.

9. Procédé selon la revendication 8, selon lequel lors de la décision à la majorité, une majorité simple des symboles suffit pour déterminer le symbole sélectionné.

10. Procédé selon la revendication 8 ou 9, selon lequel lors de la décision à la majorité, un nombre d'autres symboles attribués (voix contre) est saisi.

11. Procédé selon l'une quelconque des revendications 1 à 10, selon lequel un nombre n de variantes discrètes produites de l'échantillon d'entrée quantifié est modifié de manière dynamique.

12. Procédé selon l'une quelconque des revendications 1 à 11, selon lequel le codage des symboles d'entrée est modifié au cours du procédé.

13. Procédé selon l'une quelconque des revendications 1 à 12, selon lequel le traitement d'échantillon est exécuté comme procédé en plusieurs niveaux, des symboles sélectionnés d'un premier niveau de procédé servant d'échantillons d'entrée d'un deuxième niveau de procédé.

14. Procédé selon la revendication 13, selon lequel la production d'un nombre n de variantes discrètes de l'échantillon d'entrée discrétisé à l'étape de procédé b) du deuxième niveau de procédé s'effectue en mélangeant des symboles de sortie du premier niveau.

15. Dispositif de traitement d'échantillon, lequel est conçu pour attribuer à un échantillon d'entrée se composant de valeurs de balayage quantifiées un symbole sélectionné à partir d'une quantité discrète, finie de symboles, lequel dispositif présents :

- un dispositif de discrétisation pour discrétiser l'échantillon d'entrée,

- un dispositif pour produire un nombre n de variantes discrètes de l'échantillon d'entrée quantifié selon des règles établies,
- un nombre n d'éléments de mémoire (50), qui sont établis pour sélectionner le symbole enregistré au point de mémoire déterminé par le symbole d'entrée présent à une entrée d'échantillon ($S_{in}$) comme symbole de sortie à une connexion de sortie ($S_{out}$),
- une unité de sélection (60) avec n connexions d'entrée ($in_1$, ..., $in_n$) pour lire les n symboles de sortie sélectionnés,
- laquelle unité de sélection (60) est conçue pour sélectionner un symbole sélectionné à partir de symboles de sortie amenés par les n unités de mémoire (50) selon une règle de détermination et de l'éditer à une sortie de résultat (out).

16. Dispositif selon la revendication 15, selon lequel les éléments de mémoire (50) et l'unité de sélection (60) sont en outre conçus pour décrire en fonction de l'évaluation entreprise par l'unité de sélection (60), les points de mémoire sélectionnés des n éléments de mémoire avec le symbole sélectionné ou avec un symbole prescrit par un utilisateur à partir de la quantité de symboles.

17. Dispositif selon la revendication 15 ou 16, selon lequel les éléments de mémoire (50) sont conçus comme des mémoires associatives.

18. Dispositif selon la revendication 15, 16 ou 17, selon lequel les niveaux d'entrée (50) présentent respectivement en supplément une entrée de symbole de référence et une entrée d'activation de mise à jour.

19. Dispositif selon l'une quelconque des revendications 15 à 18, selon lequel l'unité de sélection (60) présente en outre une sortie de symbole, une sortie pour éditer un signal (majority), lequel indique un nombre du symbole sélectionné et une sortie pour éditer un signal (veto), lequel indique un nombre d'autres symboles entrés.

20. Dispositif selon l'une quelconque des revendications 15 à 19, selon lequel l'unité de sélection (60) présente en supplément une entrée de symbole de référence et une entrée d'activation de mise à jour.

21. Dispositif selon l'une quelconque des revendications 15 à 20, lequel est conçu comme dispositif de traitement d'échantillon à plusieurs niveaux, des symboles sélectionnés d'un premier niveau de traitement (100) servant d'échantillons d'entrée d'un second niveau de traitement (200).

22. Dispositif selon la revendication 21, selon lequel des mélangeurs (120) sont prévus pour mélanger des symboles de sortie du premier niveau (100).

23. Programme informatique, lequel exécute le procédé selon l'une quelconque des revendications 1 à 14, lorsqu'il se déroule dans un système informatique.

24. Support de données, sur lequel est enregistré un programme informatique selon la revendication 23.

Fig. 1

Fig. 2

Memory Unit (M)

Fig. 3

Voting Unit (V)

Fig. 4

Fig. 5

Fig. 6

| Quantisierung eines Eingangsbildes | S2 |
|---|---|

↓

| Erzeugung einer Anzahl n von diskreten Varianten des quantisierten Eingangsbildes | S4 |
|---|---|

↓

| Erzeugung eines zugeordneten Ausgangssymbols aus einer festgelegten Menge von Symbolen | S6 |
|---|---|

↓

| Auswahl eines Symbols als ausgewähltes Symbol zu dem Eingangsbild aus den n erzeugten Ausgangssymbolen | S8 |
|---|---|

Fig. 7

Fig. 8

Fig. 9

Fig. 10

**IN DER BESCHREIBUNG AUFGEFÜHRTE DOKUMENTE**

**In der Beschreibung aufgeführte Patentdokumente**

- US 5422961 A

- US 6081620 A

**In der Beschreibung aufgeführte Nicht-Patentliteratur**

- Design of a recognition dictionary using artificially distorted characters. *Systems and Computers in Japan,* 1990, vol. 21 (9), 35-44